# EUROPÄISCHE PATENTSCHRIFT

(11) **EP 2 116 324 B1**
(45) Veröffentlichungstag und Bekanntmachung des Hinweises auf die Patenterteilung: **22.12.2010**
(21) Anmeldenummer: 09153038.6
(22) Anmeldetag: 17.02.2009
(51) Int. Cl.: B23Q 1/00, B23Q 17/00, G08C 17/00, H01F 38/18

(54) **Vorrichtung zur drahtlosen Übertragung von Signalen zwischen zwei Teilen einer Bearbeitungsmaschine**
Device for wireless transfer of signals between two sections of a processing machine
Dispositif de transmission sans fil de signaux entre deux parties d'une machine de traitement

(30) Priorität: 10.05.2008 DE 102008023224
(43) Veröffentlichungstag der Anmeldung: 11.11.2009
(73) Patentinhaber: Ott-Jakob Spanntechnik GmbH, 87663 Lengenwang (DE)
(72) Erfinder: Gast, Stephan, 86987 Schwabsoien (DE); Greif, Josef, 87654 Friesenried (DE); Bonerz, Stefan, 87600 Kaufbeuren (DE); Fuhrmann, Markus, 87629 Füssen (DE); Hörger, Winfried, 87675 Stötten am Auerberg (DE)
(74) Vertreter: Charrier, Rapp & Liebau

(56) Entgegenhaltungen:
- EP-A- 1 112 810
- DE-A1-102004 010 348
- JP-A- 2 184 241

## Beschreibung

Die Erfindung betrifft eine Vorrichtung zur drahtlosen Übertragung von Signalen nach dem Oberbegriff des Anspruchs 1. Eine solche Vorrichtung ist aus der DE 20 2004 016 751 A1 bekannt, in der die Optimierung von induktiv gekoppelten Transpondersystemen für den Bereich des Maschinen- und Anlagenbaus beschrieben wird. Zur Verwendung solcher Transpondersysteme in metallischer Umgebung wird hierbei die Verwendung hochpermeablen Materials vorgeschlagen, welches das Eindringen der magnetischen Feldlinien in Metall verhindert und die Funktion bei diesen Umgebungsbedingungen gewährleistet.

Bei Funk-Transpondersystemen mit einer Rotationsbewegung zwischen Sender und Empfänger bestimmt die Abstrahl- bzw. Empfangscharakteristik der jeweiligen Antenne auf dem Rotor und/oder dem Stator wesentlich die Qualität der Datenübertragung. Erwünscht ist hierbei eine möglichst konstante Sende- bzw. Empfangsqualität in jeder Winkelstellung. Eine suboptimale Sende- und/oder Empfangsqualität führt unmittelbar zu einer Erhöhung der Fehlerrate bei der Datenübertragung.

So besitzt beispielsweise eine an die Sende- bzw. Empfangsfrequenz sowie die geometrischen Randbedingungen angepasste, in Umfangsrichtung des Rotors bzw. des Stators verlaufende Drahtschleife entlang ihrer Umfangsrichtung physikalisch bedingt ein oder mehrere Abstrahlungs- bzw. Empfangsminima. Dies führt aufgrund der Rotationsbewegung des Rotors zu einer starken Amplitudenmodulation, die unmittelbar Auswirkung auf die Möglichkeit der Datenrekonstruktion auf der Empfangsseite hat. Gleiches gilt sinngemäß auch für Dipolantennen. Auch hier finden sich in der räumlichen Abstrahl- bzw. Empfangscharakteristik Minima, welche sich negativ auf die Übertragungsqualität auswirken.

Kommerziell erhältliche Funkempfangsbausteine haben im Antenneneingangsbereich einen variablen Verstärker, dessen Verstärkungsfaktor mittels einer Regelschleife an das empfangene Signal angepasst wird. Diese Regelung besitzt ein Einschwingverhalten, welches sich bei höheren Rotationsgeschwindigkeiten störend auf die Datenübertragung auswirkt, so dass vielfach kein Empfang oder nur ein Empfang mit hoher Fehlerrate möglich ist. In einem solchen Fall kann zwar durch die Anwendung von Codierverfahren, die eine Fehlererkennung ermöglichen (z.B. CRC-Check), sowie durch eine Mehrfach-Datenübertragung, d.h. durch mehrfaches Senden der einzelnen zu übertragenden Datenworte, die Fehlerrate reduziert werden. Dies führt jedoch zu einer Verminderung der effektiven Datenübertragungsrate, was in vielen Applikationsbereichen unerwünscht ist.

Kommerziell erhältliche Sende- und Empfangsantennen sind nicht für den Einsatz in rotationssymmetrischen Aufbauten konzipiert. Zwar ist bei derartigen Antennen prinzipiell eine rotationssymmetrische Charakteristik gegeben, jedoch müsste die Antenne in axialer Richtung montiert sein und gleichzeitig freie Sicht zur entsprechenden Gegenantenne gegeben sein, damit die rotationssymmetrische Charakteristik zum Tragen käme. Dies ist jedoch konstruktionsbedingt nicht möglich, da die Rotorelektronik stets auf dem Umfang einer Welle montiert werden muss, so dass der Zustand der freien Sicht in axialer Richtung nicht gegeben ist.

Es wäre eine Lösung denkbar, bei der die aktuelle Winkelposition relativ zu einer Referenzposition ständig mittels einer geeigneten Sensorik auf dem Rotor gemessen wird und die Datenübertragung stets nur in einem begrenzten Winkelsegment erfolgt, in dem eine gute Übertragungsqualität gewährleistet ist. Damit wäre zwar der Einsatz kommerziell erhältlicher Antennen möglich, doch hat diese Lösung die Nachteile eines hohen Kostenaufwandes zur Erfassung und Verarbeitung der Winkelposition des Rotors sowie einer zwangsläufigen Reduktion der erzielbaren Datenrate.

Die Aufgabe der Erfindung ist es daher, eine Antennenanordnung für eine gattungsgemäße Vorrichtung zu schaffen, welche eine störungsfreie Datenübertragung mit hoher Datenrate ermöglicht.

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Die Erfindung basiert auf der Kombination einer Vielzahl von Antennen, von denen zwar keine für sich allein die gewünschte radialsymmetrische Abstrahlungs- bzw. Empfangscharakteristik bezüglich der zwei durch eine drahtlose Übertragungsstrecke zu verbindenden Maschinenteile aufweist, deren Einzelcharakteristiken jedoch bei einer Zusammenschaltung der Antennen und geeigneter Speisung auf der Senderseite bzw. geeigneter Überlagerung der Einzelsignale auf der Empfängerseite eine näherungsweise radialsymmetrische Gesamtcharakteristik der Übertragung ergeben. Dabei genügt im Prinzip die Verwendung einer solchen Antennenkombination entweder auf der Senderseite oder auf der Empfängerseite, doch kann die Wirkung durch Verwendung auf beiden Seiten noch gesteigert werden.

Eine erste zweckmäßige Variante der Realisierung besteht in einer gegenseitigen räumlichen Überlappung der Einzelantennen in Umfangsrichtung der Rotation. Eine solche Überlappung führt bei geeigneter Wahl des gegenseitigen Versatzes der Einzelantennen in besagter Umfangsrichtung durch eine entsprechende Überlagerung der einzelnen Übertragungscharakteristiken zu einer Gesamtcharakteristik mit wesentlich weniger stark ausgeprägten Extrema.

Eine zweite zweckmäßige Variante der Realisierung besteht in einer entsprechend der Reihenfolge in Umfangsrichtung der Rotation phasenverschobenen Speisung mehrerer Sendeantennen und/oder einer entsprechend phasenverschobenen Überlagerung der Empfangssignale mehrerer Empfangsantennen.

Weitere vorteilhafte Ausgestaltungen der Erfindung sind den Unteransprüchen entnehmbar.

Nachfolgend werden Ausführungsbeispiele der Erfindung unter Bezugnahme auf die Zeichnungen beschrieben. In diesen zeigt
- Fig. 1: ein Blockschaltbild eines drahtlosen Sensorsystems für eine Bearbeitungsmaschine,
- Fig. 2: eine Längsschnittansicht von Teilen einer mit einem drahtlosen Sensorsystem ausgestatteten Bearbeitungsmaschine,
- Fig. 3: ein Blockschaltbild einer ersten erfindungsgemäßen Antennenanordnung,
- Fig. 4: eine schematische Axialansicht der Antennenanordnung nach Fig. 3,
- Fig. 5: die Zusammenschaltung der Antennenanordnung nach Fig. 3 und Fig. 4
- Fig. 6: ein Blockschaltbild einer zweiten erfindungsgemäßen Antennenanordnung,
- Fig. 7: eine schematische Axialansicht der Antennenanordnung nach Fig. 6,
- Fig. 8: eine schematische Axialansicht einer dritten erfindungsgemäßen Antennen- anordnung in Verbindung mit einem Strahlungsdiagramm einer Einzelantenne,
- Fig. 9: die Zeitverläufe der Empfangsleistungen der einzelnen Antennen von Fig. 8
- Fig. 10: den Zeitverlauf der Überlagerung der Empfangsleistungen von Fig. 9

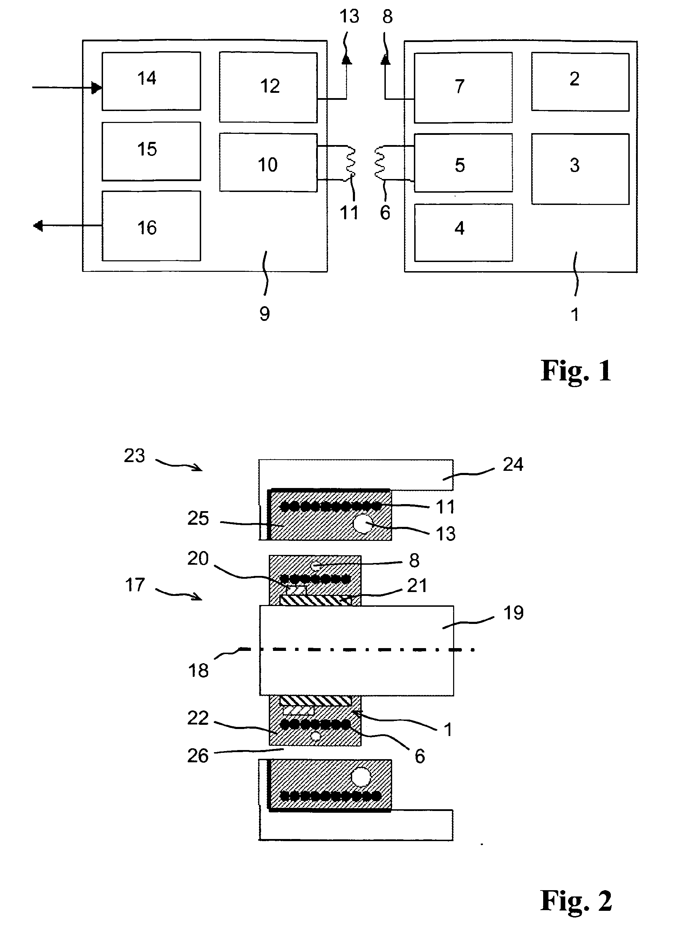

Bei modernen automatischen Bearbeitungsmaschinen besteht ein Trend zum Einsatz von drahtlosen Sensorsystemen für die Erfassung des Verlaufs von Betriebsparametern wie beispielsweise Kraft-, Drehmoment- und Temperaturwerten. Ein Blockschaltbild eines solchen Sensorsystems zeigt Fig. 1. Dabei befindet sich auf einem im Betrieb der Maschine rotierenden Teil, nachfolgend Rotor genannt, die Rotorelektronik 1. Sie umfasst als wesentliche Funktionseinheiten einen oder mehrere Sensoren 2, z. B. Dehnungsmessstreifen, eine Scnsorsignalaufbereitung 3, einen Mikrocontroller 4, einen Leistungswandler 5 mit einer Sekundärspule 6 zur induktiven Versorgung der übrigen Einheiten mit elektrischer Leistung und ein Funkmodul 7 mit einer Antenne 8 für die externe Kommunikation, insbesondere die Übertragung crfasster Messdaten.

Auf einem feststehenden Teil der Maschine, nachfolgend Stator genannt, befindet sich die Statorclektronik 9. Sie umfasst als wesentliche Funktionseinheiten einen Leistungswandler 10 zur induktiven Abgabe elektrischer Leistung an die Rotorelektronik 1 über eine Primärspule 11, ein Funkmodul 12 mit einer Antenne 13 zur Kommunikation mit der Rotorelektronik 1, einen Leistungswandler 14 zur Aufnahme elektrischer Leistung von einer nicht dargestellten Stromversorgung der Maschine, einen Mikrocontroller 15, sowie eine Schnittstelle 16 zur Weitergabe der von dem Sensor 2 gemessenen und zur Statorelektronik 9 übertragenen Daten an eine übergeordnete Maschinensteuerung.

Das Sensorsystem basiert auf an sich bekannter Transpondertechnologie, wobei die Leistung in die Rotorelektronik 1 induktiv beispielsweise bei einer Frequenz in der Größenordnung von 30 kHz eingekoppelt wird und die aufgenommenen Messdaten per Funk beispielsweise bei einer Frequenz in der Größenordnung von 2,4 GHz oder in einem anderen ISM-Band an die Statorelektronik 9 gesendet werden.

Eine Längsschnittansicht von Teilen einer mit einem derartigen drahtlosen Sensorsystem ausgestatteten Bearbeitungsmaschine ist in Fig. 2 zu sehen. Der Rotor 17 dreht sich im Betrieb der Maschine um eine Achse 18. Er umfasst eine zylindrische Welle oder Spindel 19 aus Metall, auf der die Rotorelektronik 1 montiert ist. Die Bauteile 20 sind auf einem flexiblen, um die Spindel 19 in Umfangsrichtung herum geführten Substrat 21 aufgebaut und von der Sekundärspule 6, deren Achse mit der Achse 18 der Spindel 19 zusammenfällt, umgeben. Die Antenne 8 der Rotorelektronik 1 bildet das radial äußerste Element der Rotorelektronik 1, die insgesamt in einen fest mit der Spindel 19 verbundenen inneren Trägerkörper 22 aus Kunststoff eingebettet ist.

Der Stator 23 umfasst ein aus Metall bestehendes mechanisches Maschinenelement 24, an dessen Innenseite ein äußerer Trägerkörper 25 aus Kunststoff in Form eines Hohlzylinders fest angebracht ist. Zwischen dem inneren Trägerkörper 22 und dem äußeren Trägerkörper 25 befindet sich ein Luftspalt 26 von entlang des Umfangs konstanter Breite. In den äußeren Trägerkörper 25 eingebettet sind die Primärspule 11 und die Antenne 13 der Statorelektronik 9, wobei die Antenne 13 radial weiter innen angeordnet ist als die Primärspule 11. Die übrigen, in Fig. 2 nicht dargestellten Komponenten der Statorelektronik 9 können ebenfalls direkt am Stator 23 angeordnet, beispielsweise in den äußeren Trägerkörper 25 eingebettet sein, können aber auch andernorts an der Maschine abseits des Stators 23 platziert sein. Im Betrieb der Maschine kann es auch zu einer Verschiebung vorbestimmten Ausmaßes des Rotors 17 gegenüber dem Stator 23 in Längsrichtung der Achse 18 kommen. Es bleibt aber stets die zuvor beschriebene Rotationssymmetrie der Anordnung von Rotor 17 und Stator 23 bezüglich der Achse 18 gewahrt.

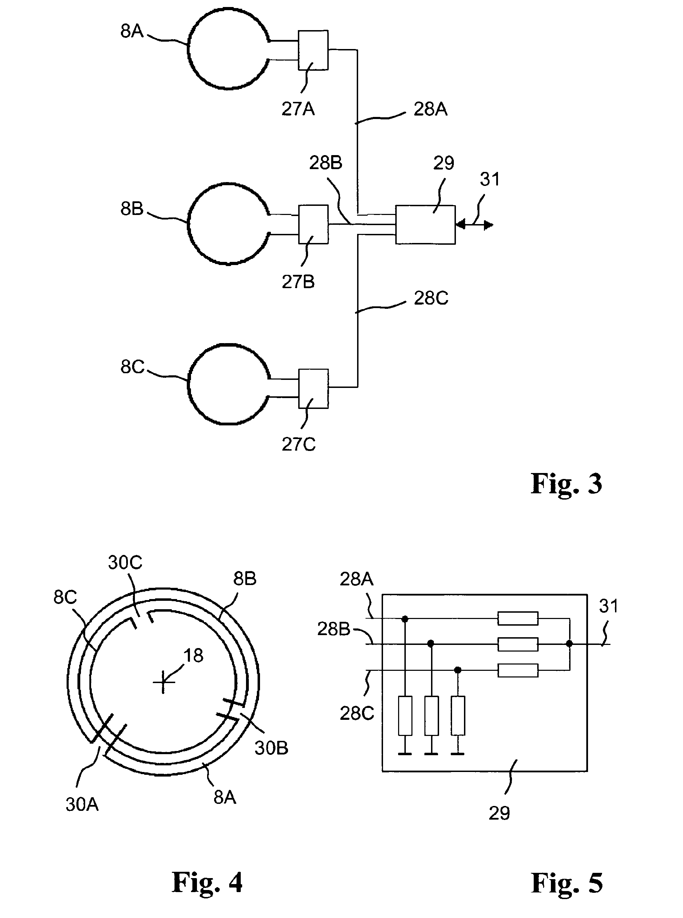

Eine erste Antennenanordnung, welche die vorliegende Erfindung verwirklicht, zeigt Fig. 3 in Form eines Blockschaltbildes. Nachfolgend wird zunächst davon ausgegangen, dass es sich um eine sendeseitige Antennenanordnung handelt. Wie aus Fig. 3 zu ersehen ist, sind drei verschiedene untereinander gleichartige Schleifenantennen 8A, 8B und 8C vorgesehen. Jede von ihnen ist über ein jeweiliges Anpassungsglied 27A, 27B bzw. 27C und eine Zuleitung 28A, 28B bzw. 28C mit einem gemeinsamen Verzweigungsglied 29 verbunden. Bei den Anpassungsgliedern 27A, 27B und 27C handelt es sich um an sich bekannte sogenannte Baluns zur Anpassung der symmetrischen Schleifenantennen 8A, 8B und 8C an die unsymmetrischen Zuleitungen 28A, 28B bzw. 28C im Interesse einer Vereinfachung der Signalverarbeitung.

Eine erfindungsgemäße Besonderheit liegt in der geometrischen Anordnung der drei Schleifenantennen 8A, 8B und 8C, die in Fig. 4 schematisch dargestellt ist. Die drei Schleifenantennen 8A, 8B und 8C sind radial konzentrisch zu der Achse 18 angeordnet und ihre Fußpunkte 30A, 30B und 30C, an denen sie jeweils radial abgewinkelt sind, sind gegeneinander fortlaufend um einen Winkel von jeweils 120° versetzt. Die anderen in den Figuren 2 und 3 gezeigten Komponenten sind in Fig. 4 der Übersichtlichkeit halber weggelassen. Die Anordnung nach Fig. 4 ist regelmäßig und bezüglich der Positionen der Fußpunkte 30A, 30B und 30C in Umfangsrichtung symmetrisch. Anstatt unterschiedliche Durchmesser zu haben, könnten die Schleifenantennen 8A, 8B und 8C auch bei gleichem Durchmesser in Längsrichtung der Achse 18 gegeneinander versetzt sein. Wesentlich ist hierbei, dass der in Fig. 4 erkennbare Unterschied im Durchmesser bzw. der alternativ mögliche Versatz in Längsrichtung der Achse 18 klein gegenüber dem mittleren Durchmesser ist, so dass er sich nicht wesentlich auf die Abstrahlungscharakteristik auswirkt, also alle drei Schleifenantennen 8A, 8B und 8C abgesehen von den unterschiedlichen Positionen der Fußpunkte 30A, 30B und 30C im wesentlichen die gleiche Abstrahlungscharakteristik haben.

Infolgedessen, dass bei einer Anordnung wie in Fig. 4 der Fußpunkt 30A, 30B bzw. 30C jeder Schleifenantenne 8A, 8B und 8C von beiden anderen Schleifenantennen überdeckt wird, erfolgt ein weitgehender Ausgleich des bei besagtem Fußpunkt 30A, 30B bzw. 30C liegenden Minimums der radialen Abstrahlungscharakteristik in der Ansichtsebene durch die Abstrahlungscharakteristiken der beiden anderen Schleifenantennen, so dass sich eine wesentlich gleichmäßigere radiale Gesamtcharakteristik der Abstrahlung ergibt.

Es kann auch zweckmäßig sein, für den Winkelversatz zwischen aufeinanderfolgenden Antennen nicht in allen Fällen den gleichen Wert zu wählen, sondern gezielte Abweichungen vorzusehen, um hierdurch Unregelmäßigkeiten des Strahlungsfeldes, die von Unregelmäßigkeiten der Form der metallischen Umgebung, beispielsweise in Form von Bohrungen herrühren, auszugleichen.

Der Vollständigkeit halber ist in Fig. 5 noch die Zusammenschaltung der einzelnen Zuleitungen 28A, 28B und 28C in dem Verzweigungsglied 29 gezeigt. Wie daraus zu ersehen ist, sind diese Zuleitungen 28A, 28B und 28C über erste Widerstände an Masse und über zweite Widerstände zu einem gemeinsamen Sternpunkt 31 geschaltet, an dem das von den drei Schleifenantennen 8A, 8B und 8C abzustrahlende gemeinsame Datensignal eingekoppelt wird.

Zu den Zuleitungen 28A, 28B und 28C ist noch zu bemerken, dass diese entgegen der schematischen Darstellung in Fig. 3 keine wesentlich unterschiedlichen Längen haben dürfen, da die daraus resultierenden Laufzeitunterschiede unerwünschte Phasenverschiebungen zwischen den von den einzelnen Antennen 8A, 8B und 8C abgestrahlten Funksignalen zur Folge hätten. Es muss also ein Längen- bzw. Laufzeitausgleich vorgesehen sein.

Die vorausgehende Beschreibung betrifft die Senderseite der Übertragungsstrecke. Ebensogut kann die Erfindung aber auch auf die Empfangsseite angewendet werden. In diesem Fall würde es sich bei den einzelnen Antennen 8A, 8B und 8C um Empfangsantennen handeln. An der Zusammenschaltung der Antennen 8A, 8B und 8C gemäß Fig. 3 und Fig. 5 sowie an ihrer geometrischen Anordnung relativ zueinander gemäß Fig. 4 würde sich jedoch auf der Empfangsseite abgesehen von der Signalflussrichtung nichts ändern. An dem Sternpunkt 31 des Verzweigungsgliedes 29 würde in diesem Fall ein Signal zur weiteren Verarbeitung abgegeben anstatt zur Abstrahlung eingespeist. Bei Verwendung von Schleifenantennen 8A, 8B und 8C bestünden im Bereich der jeweiligen Fußpunkte dann Minima der radialen Empfangscharakteristik, die wiederum durch die Überlappung und den regelmäßigen symmetrischen Winkelversatz der Einzelantennen weitgehend ausgeglichen würden.

Selbstverständlich ist auch eine gleichzeitige Anwendung dieser Ausführungsform der Erfindung sowohl auf der Sendeseite, als auch auf der Empfangsseite möglich. Es versteht sich, dass die ausgleichende Wirkung der Erfindung auf die Übertragungscharakteristik umso ausgeprägter ist, je mehr verschiedene Einzelantennen verwendet werden. Da der Anzahl der Antennen, die auf jeder einzelnen der beiden Seiten vorgesehen werden können, durch den dafür jeweils zur Verfügung stehenden Platz Grenzen gesetzt sind, kann es sogar besonders zweckmäßig sein, sowohl auf der Sendeseite, als auch auf der Empfangsseite jeweils mehrere Antennen vorzusehen.

Zu beachten ist, dass in der Konfiguration, für welche die Erfindung konzipiert ist, der Abstand zwischen Sender und Empfänger sehr gering ist, so dass für die räumliche Abstrahlungs- bzw. Empfangscharakteristik der Antennen das Nahfeld und nicht das Femfeld maßgeblich ist. Der Feldverlauf wird außerdem durch die metallische Umgebung (Spindel 19, Maschinenelement 24), d.h. deren reflektierendes Verhalten, erheblich beeinflusst, was bei der genauen Dimensionierung der Antennenanordnung unbedingt berücksichtigt werden muss.

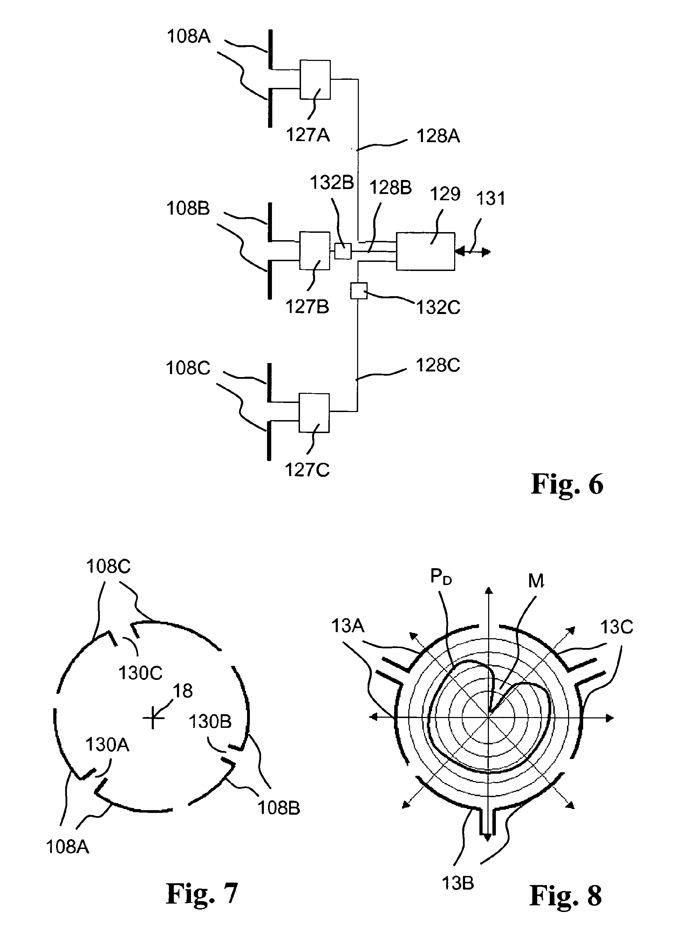

Eine zweite Antennenanordnung, welche die vorliegende Erfindung verwirklicht, zeigt Fig. 6 in Form eines Blockschaltbildes. Auch hier wird nachfolgend zunächst davon ausgegangen, dass es sich um eine sendeseitige Antennenanordnung handelt. Wie aus Fig. 6 zu ersehen ist, sind drei verschiedene untereinander gleichartige Dipolantennen 108A, 108B und 108C vorgesehen. Jede von ihnen ist über ein jeweiliges Anpassungsglied 127A, 127B bzw. 127C und eine Zuleitung 128A, 128B bzw. 128C mit einem gemeinsamen Verzweigungsglied 129 verbunden, welches wie das in Fig. 5 gezeigte Verzeigungsglied 29 aufgebaut ist. Bei den Anpassungsgliedern 127A, 127B und 127C handelt es sich auch hier um Baluns zur Anpassung der symmetrischen Dipolantennen 108A, 108B und 108C an die unsymmetrischen Zuleitungen 128A, 128B bzw. 128C im Interesse einer Vereinfachung der Signalverarbeitung.

Eine erste erfindungsgemäße Besonderheit liegt in der Anordnung von Verzögerungsgliedern 132B und 132 C, beispielsweise in Form von Verzögerungsleitungen, in den Zuleitungen 128B bzw. 128C. Die einzelnen Dipolantennen 108A, 108B und 108C erhalten somit zwar dasselbe Signal zur Abstrahlung, doch wird dieses nicht phasengleich, sondern mit einer definierten gegenseitigen Phasenverschiebung eingespeist, welche fortlaufend 120° ausmacht, d.h. für die Antenne 108B gegenüber der Antenne 108A 120° und für die Antenne 108C gegenüber der Antenne 108A 240° beträgt. Es kann auch zweckmäßig sein, für die Phasenverschiebung zwischen aufeinanderfolgenden Antennen nicht in allen Fällen den gleichen Wert zu wählen, sondern gezielte Abweichungen vorzusehen, um hierdurch Unregelmäßigkeiten des Strahlungsfeldes, die von Unregelmäßigkeiten der Form der metallischen Umgebung, beispielsweise in Form von Bohrungen herrühren, auszugleichen.

Eine weitere erfindungsgemäße Besonderheit liegt in der geometrischen Anordnung der drei untereinander gleichen Dipolantennen 108A, 108B und 108C, die in Fig. 7 schematisch dargestellt ist. Die drei Dipolantennen 108A, 108B und 108C sind nebeneinander auf einem um die Achse 18 der Spindel 19 (Fig. 2) als Mittelpunkt verlaufenden Kreis angeordnet und fortlaufend in Umfangsrichtung um einen Winkel von jeweils 120° versetzt, so dass jede der Dipolantennen 108A, 108B und 108C einen Sektor von etwa 120° abdeckt. Folglich sind auch die Fußpunkte 130A, 130B und 130C, an denen die Dipolantennen 108A, 108B und 108C jeweils radial abgewinkelt sind, gegeneinander fortlaufend um einen Winkel von jeweils 120° versetzt. Die anderen in den Figuren 2 und 6 gezeigten Komponenten sind in Fig. 7 wiederum der Übersichtlichkeit weggelassen. Die Anordnung nach Fig. 7 ist regelmäßig und in Umfangsrichtung symmetrisch.

Infolge der durch die Verzögerungsglieder 132B und 132 C bewirkten Phasenverschiebungen zwischen den durch die Antennen 108A, 108B und 108C abgestrahlten Signalen ergibt die Überlagerung dieser Signale einen weitgehenden Ausgleich der Minima der radialen Abstrahlungscharakteristik jeder einzelnen Dipolantenne 108A, 108B und 108C, so dass sich eine annähernd gleichmäßige radiale Gesamtcharakteristik der Abstrahlung ergibt.

Die vorausgehende Beschreibung betrifft die Sendeseite der Übertragungsstrecke. Auch diese Ausführungsform der Erfindung kann ebensogut auf die Empfangsseite angewendet werden. In diesem Fall würde es sich bei den einzelnen Antennen um Empfangsantennen handeln. An der Zusammenschaltung der Antennen gemäß Fig. 5 und Fig. 6 sowie an ihrer geometrischen Anordnung relativ zueinander gemäß Fig. 7 würde sich jedoch auf der Empfangsseite abgesehen von der Signalflussrichtung nichts ändern. Die Verzögerungsglieder 132B und 132C würden in diesem Fall Phasenverschiebungen der von den Antennen 108B bzw. 108C empfangenen Signale bewirken. Die Anwendung der zweiten Ausführungsform der Erfindung auf der Empfangsseite wird nachfolgend unter Bezugnahme auf die Figuren 8 bis 10 näher erläutert.

Fig. 8 zeigt beispielhaft eine symmetrische kreisförmige Anordnung von drei Dipolantennen 13A, 13B und 13 C, bei denen es sich um Empfangsantennen handelt. Im Inneren der Antennenanordnung ist ein radiales Abstrahlungsdiagramm üblicher Art für eine einzelne Dipolantenne eingezeichnet. Hierbei ist in radialer Richtung die Leistungsdichte P_{D} in Abhängigkeit von der Richtung angegeben. Der dargestellte Verlauf P_{D}, der für eine spezielle Winkelposition des Dipols gilt, weist ein ausgeprägtes Minimum M auf. Es sei nun angenommen, dass eine einzelne Dipolantenne mit der dargestellten Abstrahlungscharakteristik P_{D} als einzige Sendeantenne auf dem Rotor 17 vorgesehen ist, und dass die drei Dipolantennen 13A, 13B und 13C als Empfangsantennen auf dem Stator 23 vorgesehen sind, wobei letztere ebenso verschaltet sind wie die Dipolantennen 108A, 108B und 108C in Fig. 6 und lediglich die Signalflussrichtung umgekehrt ist.

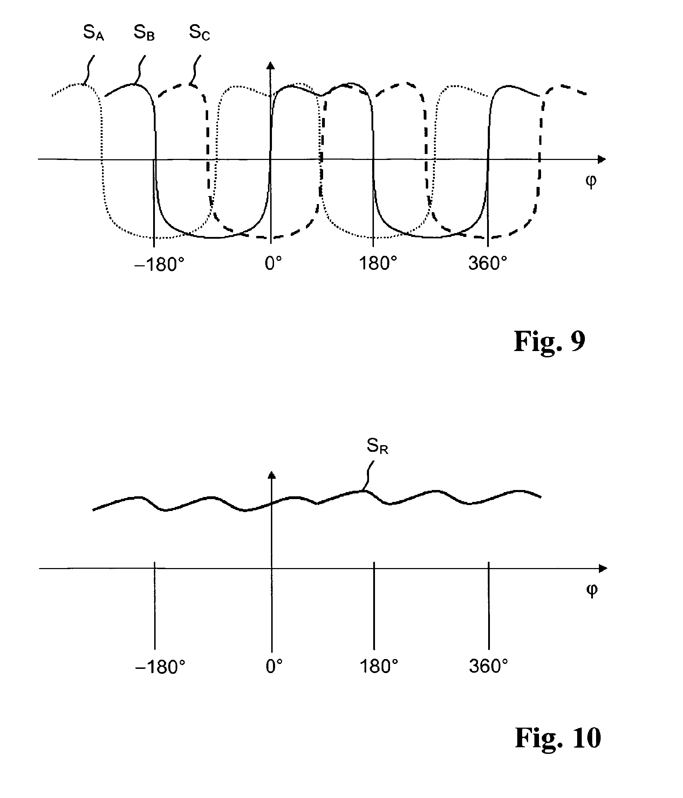

Fig. 9 zeigt den Verlauf der Signalstärken S_{A}, S_{B} und S_{C} der Empfangssignale der drei Empfangsantennen 13A, 13B und 13C als Funktion des Drehwinkels ϕ des als Sendeantenne vorgesehenen Dipols. Es sind jeweils ausgeprägte Maxima und Minima zu erkennen, wobei die Lage der Abszisse in Fig. 9 willkürlich gewählt wurde und keine Nulllinie darstellt. Addiert man die drei Empfangssignale S_{A}, S_{B} und S_{C} mit einer fortlaufenden Phasenverschiebung von jeweils 120° unter Verwendung eines Verzweigungsgliedes nach Art von Fig. 5, so ergibt sich qualitativ der in Fig. 10 dargestellte Verlauf der resultierenden Signalstärke S_{R} über dem Drehwinkel ϕ der Sendeantenne. Ein solcher Signalverlauf würde am Sternpunkt 131 der Schaltung nach Fig. 6 abgegeben, wenn die dortigen Sendeantennen 108A, 108B und 108C durch die Empfangsantennen 13A, 13B und 13C ersetzt würden. Der Verlauf von S_{R} ist zwar noch mit einer geringfügigen Welligkeit behaftet, aber weitaus gleichmäßiger als jeder einzelne der Verläufe von S_{A}, S_{B} und S_{C}.

Selbstverständlich ist auch bei der zweiten Ausführungsform eine gleichzeitige Anwendung der Erfindung sowohl auf der Sendeseite, als auch auf der Empfangsseite möglich. Es versteht sich, dass auch hier die ausgleichende Wirkung der Erfindung auf die Übertragungscharakteristik umso ausgeprägter ist, je mehr verschiedene Einzelantennen verwendet werden. Aus Platzgründen kann es auch hier besonders zweckmäßig sein, sowohl auf der Sendeseite, als auch auf der Empfangsseite jeweils mehrere Antennen vorzusehen. Auch die vorausgehenden Anmerkungen zur Maßgeblichkeit des Nahfeldes und zum Einfluss des Reflexionsverhaltens der metallischen Umgebung gelten für die zweite Ausführungsform der Erfindung ebenso wie für die erste.

Aus der vorausgehenden Beschreibung ergeben sich für den Fachmann verschiedene Möglichkeiten für Abwandlungen der Erfindung. So muss beispielsweise die Überlappung in Umfangsrichtung nicht wie bei den Schleifenantennen der ersten Ausführungsform nahezu 360° betragen, sondern es kann auch eine überlappende Anordnung anderer Antennenformen wie z. B. von Dipolen vorgesehen sein, bei der das Ausmaß der Überlappung deutlich geringer sein kann. Ferner können die beiden hier erläuterten Ausführungsformen auch miteinander kombiniert werden, d.h. es kann auch bei einer überlappenden Anordnung sinnvoll sein, zusätzlich eine Phasenverschiebung der Signale vorzusehen. Die in den Ausführungsbeispielen vorgesehene Anzahl von jeweils drei Antennen ist selbstverständlich rein beispielhaft gemeint und kann entsprechend den Anforderungen und Rahmenbedingungen (Platzverhältnisse, Kostenaufwand) der einzelnen Anwendung variiert werden. Die Kommunikation zwischen der Rotorelektronik 1 und der Statorelektronik 9 kann auch bidirektional sein, beispielsweise zur Aktivierung bestimmter Funktionen der Rotorelektronik 1, wie eines Selbsttests des Sensors 2, von der Statorelektronik 9 aus.

## Patentansprüche

1. Vorrichtung zur drahtlosen Übertragung von Signalen zwischen zwei Teilen (17, 23) einer Bearbeitungsmaschine, von denen eines im Betrieb der Bearbeitungsmaschine relativ zum anderen um eine Achse (18) rotiert, **dadurch gekennzeichnet, dass** zumindest an einem der beiden Teile (17, 23) mehrere Antennen (8A, 8B, 8C; 108A, 108B, 108C; 13A, 13B, 13C) in einer zumindest annähernd regelmässigen Verteilung bezüglich der Umfangsrichtung der Rotation angeordnet sind, und dass die Antennen (8A, 8B, 8C; 108A, 108B, 108C; 13A, 13B, 13C) zur Erreichung einer näherungsweise radialsymmetrischen Gesamtcharakteristik der Übertragung parallel zueinander mit einer dem jeweiligen Teil (17, 23) zugeordneten Sendeeinrichtung (7) und/oder Empfangseinrichtung (12) verbunden sind.

2. Vorrichtung nach Anspruch 1, **dadurch gekennzeichnet, dass** an beiden Teilen (17, 23) der Bearbeitungsmaschine jeweils mehrere Antennen (8A, 8B, 8C; 108A, 108B, 108C; 13A, 13B, 13C) in einer zumindest annähernd regelmässigen Verteilung bezüglich der Umfangsrichtung der Rotation angeordnet sind.

3. Vorrichtung nach Anspruch 1 oder 2, **dadurch gekennzeichnet, dass** die einzelnen Antennen (8A, 8B, 8C; 108A, 108B, 108C; 13A, 13B, 13C), die am selben Teil der Bearbeitungsmaschine angeordnet sind, untereinander die gleiche Form haben und in Umfangsrichtung um einen Winkel versetzt sind, der zumindest annähernd 360° geteilt durch die Anzahl der Antennen (8A, 8B, 8C; 108A, 108B, 108C; 13A, 13B, 13C) beträgt.

4. Vorrichtung nach einem der Ansprüche 1 bis 3, **dadurch gekennzeichnet, dass** sich die Längen der einzelnen Antennen (8A, 8B, 8C) in Umfangsrichtung der Rotation überlappen und die einzelnen Antennen radial und/oder in Längsrichtung der Rotationsachse (18) zumindest teilweise gegeneinander versetzt angeordnet sind.

5. Vorrichtung nach einem der Ansprüche 1 bis 4, **dadurch gekennzeichnet, dass** von der Sendeeinrichtung 7 in die einzelnen Antennen (8A, 8B, 8C) gleichphasige Signale eingespeist werden und von der Empfangseinrichtung (12) aus den einzelnen Antennen empfangene Signale gleichphasig miteinander überlagert werden.

6. Vorrichtung nach einem der Ansprüche 1 bis 4, **dadurch gekennzeichnet, dass** durch die Sendeeinrichtung in die einzelnen Antennen (108A, 108B, 108C) phasenverschobene Signale eingespeist werden und/oder von den einzelnen Antennen (13A, 13B, 13C) empfangene Signale durch die Empfangseinrichtung phasenverschoben miteinander überlagert werden.

7. Vorrichtung nach Anspruch 6, **dadurch gekennzeichnet, dass** die Phasenverschiebung zumindest annähernd 360° geteilt durch die Anzahl der Antennen (1 08A, 108B, 108C; 13A, 13B, 13C) beträgt.

## Claims

1. Device for wireless transmission of signals between two parts (17, 23) of a machine tool, one of which rotates relative to the other about an axis (18) when the machine tool is in operation, **characterised in that** a plurality of antennas (8A, 8B, 8C; 108A, 108B, 108C; 13A, 13B, 13C) are arranged on at least one of the two parts (17, 23) in an at least approximately regular distribution relative to the circumferential direction of rotation, and **in that** the antennas (8A, 8B, 8C; 108A, 108B, 108C; 13A, 13B, 13C) are connected parallel to one another with a transmitting device (7) and/or receiving device (12) associated with the respective part (17, 23) to achieve an approximately radially symmetrical overall transmission characteristic.

2. Device according to claim 1, **characterised in that** in each case a plurality of antennas (8A, 8B, 8C; 108A, 108B, 108C; 13A, 13B, 13C) are arranged on both parts (17, 23) of the machine tool in an at least approximately regular distribution relative to the circumferential direction of rotation.

3. Device according to claim 1 or 2, **characterised in that** the individual antennas (8A, 8B, 8C; 108A, 108B, 108C; 13A, 13B, 13C) which are arranged on the same part of the machine tool have the same form and are offset in the circumferential direction by an angle which is at least approximately 360° divided by the number of antennas (8A, 8B, 8C; 108A, 108B, 108C; 13A, 13B, 13C).

4. Device according to one of claims 1 to 3, **characterised in that** the lengths of the individual antennas (8A, 8B, 8C) overlap in the circumferential direction of rotation and the individual antennas are at least partly offset in relation to one another radially and/or in the longitudinal direction of the rotational axis (18).

5. Device according to one of claims 1 to 4, **characterised in that** in-phase signals are fed into the individual antennas (8A, 8B, 8C) by the transmitting device 7 and signals received from the individual antennas by the receiving device (12) are overlaid in phase with one another.

6. Device according to one of claims 1 to 4, **characterised in that** out-of-phase signals are fed into the individual antennas (108A, 108B, 108C) by the transmitting device and/or signals received from the individual antennas (13A, 13B, 13C) are overlaid out of phase with one another by the receiving device.

7. Device according to claim 6, **characterised in that** the phase displacement is at least approximately 360° divided by the number of antennas (108A, 108B, 108C; 13A, 13B, 13C).

## Revendications

1. Dispositif de transmission de signaux, sans fil, entre deux parties (17, 23) d'une machine de traitement dont l'une tourne par rapport à l'autre autour d'un axe (18), au cours du fonctionnement de ladite machine de traitement, **caractérisé par le fait que** plusieurs antennes (8A, 8B, 8C ; 108A, 108B, 108C ; 13A, 13B, 13C) sont implantées sur au moins l'une des deux parties (17, 23), avec répartition au moins approximativement régulière vis-à-vis de la direction périphérique de la rotation ; et **par le fait que** lesdites antennes (8A, 8B, 8C ; 108A, 108B, 108C ; 13A, 13B, 13C) sont raccordées à un système émetteur (7) et/ou à un système récepteur (12) assigné à la partie (17, 23) considérée, en parallèle les unes avec les autres, en vue d'atteindre une caractéristique globale de la transmission présentant, approximativement, une symétrie radiale.

2. Dispositif selon la revendication 1, **caractérisé par le fait que** plusieurs antennes (8A, 8B, 8C ; 108A, 108B, 108C ; 13A, 13B, 13C) sont implantées à chaque fois, sur les deux parties (17, 23) de la machine de traitement, avec répartition au moins approximativement régulière vis-à-vis de la direction périphérique de la rotation.

3. Dispositif selon la revendication 1 ou 2, **caractérisé par le fait que** les antennes individuelles (8A, 8B, 8C ; 108A, 108B, 108C ; 13A, 13B, 13C), implantées sur la même partie de la machine de traitement, offrent réciproquement la même forme et sont décalées, dans le sens périphérique, d'un angle mesurant au moins approximativement 360° divisé par le nombre desdites antennes (8A, 8B, 8C ; 108A, 108B, 108C ; 13A, 13B, 13C).

4. Dispositif selon l'une des revendications 1 à 3, **caractérisé par le fait que** les longueurs des antennes individuelles (8A, 8B, 8C) se chevauchent dans la direction périphérique de la rotation et lesdites antennes individuelles sont agencées, au moins partiellement, avec décalage mutuel dans le sens radial et/ou dans la direction longitudinale de l'axe de rotation (18).

5. Dispositif selon l'une des revendications 1 à 4, **caractérisé par le fait que** des signaux de même phase sont introduits dans les antennes individuelles (8A, 8B, 8C) par le système émetteur (7) ; et des signaux reçus en provenance desdites antennes individuelles sont mutuellement superposés, par le système récepteur (12), avec identité de phase.

6. Dispositif selon l'une des revendications 1 à 4, **caractérisé par le fait que** des signaux à phase décalée sont introduits dans les antennes individuelles (108A, 108B, 108C) par le système émetteur ; et/ou des signaux reçus en provenance desdites antennes individuelles (108A, 108B, 108C) sont mutuellement superposés, par le système récepteur, avec décalage de phase.

7. Dispositif selon la revendication 6, **caractérisé par le fait que** le décalage de phase mesure au moins approximativement 360° divisé par le nombre des antennes (108A, 108B, 108C ; 13A, 13B, 13C).
